# EUROPÄISCHE PATENTSCHRIFT

(11) **EP 1 118 894 B1**
(45) Veröffentlichungstag und Bekanntmachung des Hinweises auf die Patenterteilung: **29.12.2004**
(21) Anmeldenummer: 01101219.2
(22) Anmeldetag: 19.01.2001
(51) Int. Cl.: G02B 13/00, G03B 27/32

(54) **Vorrichtung zum Vergrössern und Belichten von digitalen Belichtungsdaten auf lichtempfindliches Fotopapier**
Device for magnification and exposure of digital imaging data on photo sensitive paper
Appareil pour l'agrandissement et l'exposition sur papier photosensible de données numériques d'exposition

(30) Priorität: 20.01.2000 DE 20000906 U
(43) Veröffentlichungstag der Anmeldung: 25.07.2001
(73) Patentinhaber: Göhner, Helmut, 32791 Lage (DE)
(72) Erfinder: Göhner, Helmut, 32791 Lage (DE)
(74) Vertreter: Dantz, Jan Henning

(56) Entgegenhaltungen:
- DE-A- 4 227 325
- PATENT ABSTRACTS OF JAPAN vol. 1998, no. 08, 30. Juni 1998 (1998-06-30) & JP 10 083030 A (FUJI PHOTO FILM CO LTD), 31. März 1998 (1998-03-31) -& US 6 081 346 A (FUJI PHOTO FILM CO LTD) 27. Juni 2000 (2000-06-27)

## Beschreibung

Die vorliegende Erfindung betrifft eine Vorrichtung zum Vergrößern und Belichten von digitalen Belichtungsdaten, z. B. von einem PC oder einer Digitalkamera, auf lichtempfindliches Fotopapier, umfassend eine Lampe mit Reflektor, einen Lichtmischer, einen zwischen zwei Polarisationsfiltern angeordneten LCD-Chip und eine Vergrößerungsoptik.

Vorrichtungen der gattungsgemäßen Art sind an sich bekannt.

Aufgrund der Besonderheiten der in solchen Vorrichtungen zum Einsatz kommenden LCD-Chips (das austretende Licht verläuft im Gegensatz zu einem durchleuchteten Negativ nicht gleichmäßig in Richtung der optischen Achse) müssen bislang zur Erzielung gleichmäßig und ohne nennenswerten Lichtabfall belichteter Bilder spezielle Objektive, sogenannte telezentrische Objektive verwendet werden, die im Vergleich zu handelsüblichen Vergrößerungsobjektiven extrem teuer sind.

Aus der JP 10083030 ist eine Vorrichtung zum Belichten von digitalen Belichtungsdaten auf einem LCD-Chip bekannt, bei dem das Licht nach dem Durchtritt durch den LCD-Chip eine einzelne Linse, eine Blende und eine Vergrößerungsoptik durchtritt, bevor die Lichtstrahlen auf ein Photopapier auftreffen. Bei den LCD-Chips tritt das oben genannte Problem auf, dass das Licht anders als bei einem durchleuchtete Negativ nicht gleichmäßig in Richtung der optischen Achse, sondern leicht schräg austritt. Ohne Ausrichtung dieses austretenden Lichtes ergibt sich ein verzerrtes Bild hinsichtlich der Helligkeit und des Kontrastes.

Ferner ist aus der DE 42 27 325 ein Projektionsdruckformenbelichter bekannt, bei dem zunächst eine Linsengruppe zur Erzeugung eines parallelen Strahlenganges mit gleichmäßiger Leuchtdichteverteilung vorgesehen ist. Dann wird das Licht durch eine Vergrößerungsoptik geleitet, bevor es ein LCD-System durchläuft, um in einer vorbestimmten Ebene ein Bild zu erzeugen. Hinter dem LCD-System sind jedoch keine Linsen für eine Korrektur wegen des oben erwähnten Ablenkungseffektes bei LCD-Chips vorhanden.

Der vorliegenden Erfindung liegt die Aufgabe zugrunde, eine Vorrichtung der gattungsgemäßen Art zu schaffen, deren Vergrößerungsoptik relativ preiswert ist und insbesondere den Einsatz in jedem Standard-Belichtungsgerät, z. B. einem Printer oder einem Vergrößerer, ermöglicht.

Diese Aufgabe wird mit einer Vorrichtung mit den Merkmalen des Anspruches 1 gelöst.

Bei der erfindungsgemäßen Lösung umfasst die Vergrößerungsoptik ein handelsübliches Vergrößerungsobjektiv und eine zwischen dem LCD-Chip und dem Vergrößerungsobjektiv angeordnetes Korrekturlinsensystem, wobei das Korrekturlinsensystem derart ausgelegt ist, dass die aus dem LCD-Chip austretenden Lichtstrahlen gleichmäßig und zentrisch in das Vergrößerungsobjektiv eingeleitet werden.

Die Vergrößerungsoptik der erfindungsgemäßen Vorrichtung besteht somit aus zwei optischen Bauteilen, nämlich einerseits aus einem handelsüblichen Vergrößerungsobjektiv, welches bei Standard-Belichtungsgeräten, Printern oder Vergrößerem ohnehin vorhanden ist und einem preiswert herstellbaren Korrekturlinsensystem und gestattet aufgrund der durch das Korrekturlinsensystem vergleichmäßigten Lichtführung die Erzielung optimaler Ergebnisse beim Vergrößern von digitalen Belichtungsdaten auf die angegebene Art und Weise.

Die Kosten für die Anschaffung eines Korrekturlinsensystems zusätzlich zum - ohnehin vorhandenen, handelsüblichen Vergrößerungsopjektiv - sind um ein Vielfaches geringer als die Kosten für die Anschaffung eines speziell angefertigten telezentrischen Objektives, welches bislang für derartige Zwecke benötigt wurde.

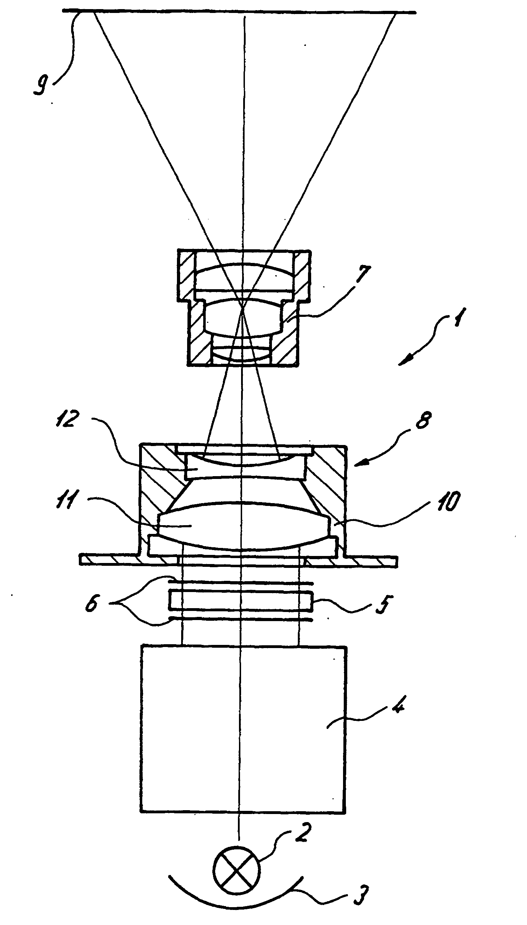

Die mit der erfindungsgemäßen Vorrichtung erzielbaren Ergebnisse stehen den Ergebnissen mit telezentrischen Objektiven in keiner Weise nach, Voraussetzung hierfür ist selbstverständlich die Verwendung eines optisch qualitativ hochwertigen Vergrößerungsobjektives. Ein Ausführungsbeispiel der Erfindung ist in der beigefügten Zeichnung dargestellt und wird im folgenden näher beschrieben.

Die einzige Figur zeigt einen schematisch dargestellten Schnitt durch eine erfindungsgemäße Vorrichtung.

In der Zeichnung ist mit dem Bezugszeichen 1 insgesamt eine Vorrichtung zum Vergrößern und Belichten von digitalen Belichtungsdaten gezeichnet, deren wesentliche Bestandteile aus einer Lampe 2 mit einem Reflektor 3, Lichtmischer 4, einem LCD-Chip 5, der zwischen zwei Polarisationsfiltern 6 angeordnet ist, sowie einer noch zu beschreibenden Vergrößerungsoptik besteht.

Die Vergrößerungsoptik besteht erfindungsgemäß aus einem handelsüblichen Vergrößerungsobjektiv 7 sowie einer zwischen dem LCD-Chip und dem Vergrößerungsobjektiv 7 angeordneten Korrekturlinse oder Korrekturlinsensystem 8.

Die Korrekturlinse oder das Korrekturlinsensystem 8 ist so ausgelegt, dass die aus dem LCD-Chip 5 austretenden Lichtstrahlen gleichmäßig und zentrisch in das Vergrößerungsobjektiv eingeleitet werden. Über das Vergrößerungsobjektiv 7 wird dann ein lichtempfindliches Fotopapier 9 in üblicher Weise belichtet.

Im Sinne einer Vergleichmäßigung der Lichtführung ist es empfehlenswert, den Abstand zwischen der Korrekturlinse oder dem Korrekturlinsensystem 8 und dem LCD-Chip 5 möglichst gering zu halten, gegebenenfalls kann sogar der LCD-Chip 5 mit seinen beiden Polarisationsfiltern 6 unmittelbar an der Fassung 10 der Korrekturlinse oder des Korrekturlinsensystems 8 montiert sein.

In der Zeichnung ist ein Korrekturlinsensystem 8 gezeigt, welches zwei Linsen 11 und 12 beinhaltet.

Dabei ist die Linse 11 als Sammellinse und die Linse 12 als Zerstreuungslinse ausgebildet.

## Patentansprüche

1. Vorrichtung zum Vergrößern und Belichten von digitalen Belichtungsdaten, z. B. von einem PC oder einer Digitalkamera, auf lichtempfindliches Fotopapier (9), umfassend eine Lampe (2) mit Reflektor (3), einen Lichtmischer(4), einen zwischen zwei Polarisationsfiltern (6) angeordneten LCD-Chip (5) und eine Vergrößerungsoptik, die ein handelsübliches Vergrößerungsobjektiv (7) umfasst,
**dadurch gekennzeichnet, dass** die Vergrößerungsoptik ein zwischen dem LCD-Chip (5) und dem Vergrößerungsobjektiv (7) angeordnetes, separates Korrekturlinsensystem (8) enthält, wobei das Korrekturlinsensystem (8) derart ausgelegt ist, dass die aus dem LCD-Chip (5) austretenden Strahlen gleichmäßig und zentrisch in das Vergrößerungsobjektiv (7) eingeleitet werden, und das Korrekturlinsensystem (8) aus zwei Linsen (11 und 12) besteht, wobei die dem LCD-Chip (5) zugewandt liegende Linse (11) als Sammellinse und die dem LCD-Chip (5) abgewandt liegende Linse (12) als Zerstreuungslinse ausgebildet ist.

2. Vorrichtung nach Anspruch 1, **dadurch gekennzeichnet, dass** der Abstand zwischen dem Korrekturlinsensystem (8) und dem LCD-Chip (5) sehr gering ist.

3. Vorrichtung nach Anspruch 1 oder 2, **dadurch gekennzeichnet, dass** der LCD-Chip (5) unmittelbar an der Fassung (10) des Korrekturlinsensystems (8) befestigt ist.

## Claims

1. Device for magnification and exposure of digital imaging data, for example from a PC or a digital camera, on photosensitive paper (9), comprising a lamp (2) with reflector (3), a light mixer (4), an LCD chip (5) arranged between two polarization filters (6), and magnification optics, which comprise a commercially available magnification objective (7),
**characterized in that** the magnification optics include a separate correction lens system (8) arranged between the LCD chip (5) and the magnification objective (7), the correction lens system (8) being designed in such a way that the rays emerging from the LCD chip (5) are led centrally into the magnification objective (7), and the correction lens system (8) comprises two lenses (11 and 12), the lens (11) facing the LCD chip (5) being formed as a convergent lens and the lens (12) facing away from the LCD chip (5) being formed as a divergent lens.

2. Device according to Claim 1, **characterized in that** the distance between the correction lens system (8) and the LCD chip (5) is very small.

3. Device according to Claim 1 or 2, **characterized in that** the LCD chip (5) is fixed directly to the mount (10) of the correction lens system (8).

## Revendications

1. Dispositif d'agrandissement et d'exposition de données numériques d'exposition, par exemple en provenance d'un PC ou d'un appareil photo numérique, sur du papier photosensible (9), comprenant une lampe (2) avec un réflecteur (3), un mélangeur de lumière (4), une puce LCD (5) montée entre deux filtres de polarisation (6) et un dispositif optique d'agrandissement comprenant un objectif d'agrandissement (7) ordinaire, **caractérisé en ce que** le dispositif optique d'agrandissement contient un système de lentilles correctrices (8) séparé, situé entre la puce LCD (5) et l'objectif d'agrandissement (7), le système de lentilles de correction (8) étant conçu de telle sorte que les rayons sortant de la puce LCD (5) sont guidés de façon régulière et centrée dans l'objectif d'agrandissement (7), et que le système de lentilles de correction (8) comprend deux lentilles (11 et 12), la lentille (11) orientée en direction de la puce LCD (5) étant conformée en lentille convergente et la lentille (12) orientée à l'opposé de la puce LCD (5) étant conformée en lentille divergente.

2. Dispositif selon la revendication 1, **caractérisé en ce que** la distance entre le système de lentilles de correction (8) et la puce LCD (5) est très faible.

3. Dispositif selon la revendication 1 ou 2, **caractérisé en ce que** la puce LCD (5) est fixée directement sur la monture (10) du système de lentilles de correction (8).
